# EUROPEAN PATENT APPLICATION

(11) **EP 4 596 502 A1**
(43) Date of publication of application: **06.08.2025**
(21) Application number: 24166225.3
(22) Date of filing: 26.03.2024
(51) Int. Cl.: C02F 1/00, B01D 61/02, B01D 61/04, B01D 61/12, C02F 1/44, C02F 1/28

(54) **WATER PURIFICATION APPARATUS**

(30) Priority: 30.01.2024 TW 113103458
(71) Applicant: Lan Shan Enterprise Co., Ltd., 508 Changhua County (TW)
(72) Inventor: LIN, Yi-Chou, Changhua County 508 (TW)
(74) Representative: Straus, Alexander

(57) **Abstract**

A water purification apparatus (1) receives raw water, which sequentially passes through a pre-filter (11), a pump (20), an RO filter (30), and a post-filter (51) and is stored in the post-filter (51) as drinking water. A recirculating water loop (60) is in fluid communication with the post-filter (51) and the pump (20) to facilitate flow of the drinking water. A water quality detector (61) generates a water quality signal corresponding to a quality value of the drinking water. A control valve (62) is in fluid communication with the recirculating water loop (60). A controller (70) receives the water quality signal and is stored with a water quality standard and a recirculation period. When a water discharging member (53) stops discharge of the drinking water and the quality value exceeds the water quality standard, the controller (70) activates the pump (20) and the control valve (62), such that the drinking water in the post-filter (51) recirculates through the recirculating water loop (60) and is re-purified.

## Description

### BACKGROUND OF THE INVENTION

### 1. Field of the Invention

The present invention relates generally to a water purification apparatus and more particularly, to a water purification apparatus capable of reducing the total dissolved solid concentration in water through a circulating mechanism.

### 2. Description of the Related Art

The conventional direct-flow reverse osmosis (hereinafter referred to "RO") water purification devices supply drinking water directly from the RO filter. However, the total dissolved solid (hereinafter referred to "TDS") concentration of the drinking water stored in the RO filter may increase along with the increase of the stored time and the change in pressure inside the RO filter. As a result, users may take the drinking water having a higher TDS concentration.

China Patent Publication No. 205382026U discloses an automatic pipeline-cleaning water purifier, which is capable of manually or automatically cleaning the RO membrane filter. The water purifier can clean the stored water stayed for three or more days in the pipeline at the downstream of the post-filter. However, the TDS concentration in the water inside the RO membrane filter, which will increase along with internal pressure of the RO membrane filter and time mas mentioned above, may usually increase within three days. As such, users may still possibly take the drinking water having a higher TDS concentration. Although manual operation can improve the aforesaid problem, users need to run the cleaning procedure and wait for a certain period of time before taking the water each time, causing inconvenience and poor user experience. Similar technology is disclosed in Taiwan Patent No. M566108, which performs cleaning in standby mode.

China Patent Publication No. 114555532A discloses a water purifier, which also describes the problem that the TDS concentration of the water in the RO filter may increase after a period without operating filtration. To provide cleaner drinking water, the patent suggests cleaning the filter before use of the water purifier. However, in the water purifier of the patent, the water in the post-filter will not be cleaned, and users may still take the water having a higher TDS concentration stored in the post-filter.

### SUMMARY OF THE INVENTION

The present invention has been accomplished in view of the above-noted circumstances. It is an objective of the present invention to provide a water purification apparatus, which can improve the total dissolved solid concentration of drinking water in the post-filter by recirculating water based on the water quality in the post-filter, thereby offering cleaner water.

To attain the above objective, the present application provides a water purification apparatus comprising a pre-filter, an RO filter, a pump, a post-filter, a recirculating water loop, a water discharging member, a water quality detector, a control valve, and a controller. The pre-filter is adapted for filtering raw water. The RO filter has an inlet and an outlet. The pump has an inlet in fluid communication with the pre-filter, and an outlet in fluid communication with the inlet of the RO filter. The post-filter is in fluid communication with the outlet of the RO filter for filtering and storing drinking water; The recirculating water loop is in fluid communication with the post-filter and the inlet of the pump for facilitating flow of the drinking water. The water discharging member is in fluid communication with the recirculating water loop for discharging and stopping discharge of the drinking water. The water quality detector is in fluid communication with the recirculating water loop for generating a water quality signal corresponding to a quality value of the drinking water. The control valve is in fluid communication with the recirculating water loop and located between the water quality detector and the inlet of the pump. The controller is electrically connected with the pump, the water quality detector, and the control valve for receiving the water quality signal, and stored with a water quality standard and a recirculation period. When the water discharging member stops discharge of the drinking water and the quality value of the drinking water represented by the water quality signal exceeds the water quality standard, the controller activates the pump and the control valve for the recirculation period, such that the drinking water in the post-filter recirculates through the recirculating water loop and is re-purified.

With the above technical features, the controller of the water purification apparatus of the present invention compares the quality value of the drinking water, which is represented by the water quality signal generated by the water quality detector, with the water quality standard to determine whether the drinking water in the post-filter is to be recirculated and then re-purified through the recirculating water loop. That is, when the quality value of the drinking water exceeds the water quality standard, the controller activates the pump and the control valve to recirculate the drinking water in the recirculating water loop, thereby ensuring that the drinking water in the post-filter meets the water quality standard. On the other hand, when the water quality signal complies with the water quality standard, the controller stays still. As a result, the water purification apparatus of the present application can produce clean water intelligently, thereby reducing water wastage and enhancing user experience.

Preferably, the water quality standard stored in the controller may include a total dissolved solid concentration of a drinking water, and the recirculation period may be set for at least 20 seconds. In this way, the drinking water in the post-filter of the water purification apparatus can be effectively cleaned.

Preferably, the water quality standard and the recirculation period may be adjustable by the controller. In this way, the water purification apparatus can be set with more suitable parameters based on the raw water conditions at the installation location of the water purification apparatus.

Preferably, the controller may close the control valve after the recirculation period has passed to prevent the drinking water in the post-filter from flowing through the control valve.

Preferably, the water purification apparatus may further comprise a check valve, which is in fluid communication with the recirculating water loop and located between the control valve and the inlet of the pump, thereby preventing the raw water filtered by the pre-filter from flowing through.

Preferably, the inlet of the pump may receive the drinking water and the raw water filtered through the pre-filter during the recirculation period so as to produce a sufficient amount of drinking water.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a schematic diagraph of a water purification apparatus according to an embodiment of the present invention, showing a state that the water discharging member is opened and the control valve is closed;
FIG. 2 is another schematic diagraph of the water purification apparatus of the embodiment of the present invention, showing a state that the water discharging member is closed and the control valve is open; and
FIG. 3 is still a schematic diagraph of the water purification apparatus of the embodiment of the present invention, showing a state that the water discharging member is closed and the control valve is closed.

### DETAILED DESCRIPTION OF THE INVENTION

First of all, it should be mentioned that the technical features provided by the present invention are not limited to specific structures, uses, or applications described in the embodiments. The terms used in the description are exemplary and generally understood by those skilled in the art. The directional terms, such as "front, rear, inner, and outer", used in the description are also exemplary and based on normal direction of usage, not intended to limit the scope of the claims.

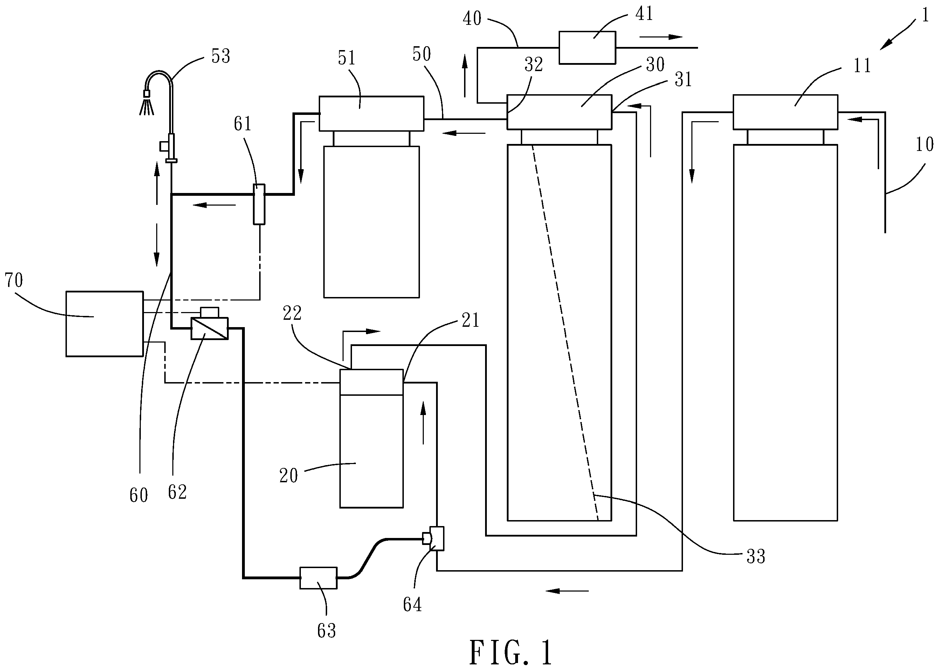

Referring to FIG. 1, the water purification apparatus 1 provided in accordance with a preferred embodiment of the present invention comprises a pre-filter pipeline 10, a pump 20, a reverse osmosis (RO) filter 30, a wastewater pipeline 40, a post-filter pipeline 50, a recirculating water loop 60, a water quality detector 61, a control valve 62, a check valve 63, and a connector 64, as well as a controller 70.

As shown in FIG. 1, the pre-filter pipeline 10 is equipped with a pre-filter 11, which is used to filter raw water. The raw water may be tap water or domestic water. For the pre-filter 11, cotton core filter, activated carbon core filter, soft water core filter, or a combination thereof may be used.

The pump 20 has an inlet 21 and an outlet 22, in which the inlet 21 is in fluid communication with the pre-filter 11 of the pre-filter pipeline 10 through the pre-filter pipeline 10.

The RO filter 30 has an inlet 31 and an outlet 32. The inlet 31 of the RO filter 30 is in fluid communication with the outlet 22 of the pump 20. The RO filter 30 includes a reverse osmosis (RO) membrane 33. The pump 20 is used to convey the raw water filtered by the pre-filter 11 into the RO filter 30, such that the raw water filtered by the pre-filter 11 can be further purified by the reverse osmosis membrane 33.

The wastewater pipeline 40 is equipped with a wastewater valve 41. The wastewater pipeline 40 is in fluid communication with the outlet 32 of the RO filter 30, for discharging the wastewater generated by the RO filter 30.

The post-filter pipeline 50 is in fluid communication with the outlet 32 of the RO filter 30. The post-filter pipeline 50 is equipped with a post-filter 51. The post-filter 51 receives and then filters the water purified by the RO filter 30 through a filter core of the post-filter 51 to produce drinking water, and the drinking water is then stored inside the post-filter 51.

The recirculating water loop 60 is in fluid communication with the inlet 21 of the pump 20 and the post-filter 51, such that the drinking water may flow therethrough. In FIGS. 1-3, the recirculating water loop 60 is depicted by thick black lines. A water discharging member 53 is in fluid communication with the recirculating water loop 60. For the water discharging member 53, a faucet or other water supply switches may be used. The water discharging member 53 is used to discharge the drinking water when it is opened and to stop the discharge of the drinking water when it is closed.

The fluid communications or connections among the pre-filter 11, the pump 20, the RO filter 30, the post-filter 51, the water discharging member 53, and the recirculating water loop 60 may be, but not limited to be, realized by pipelines.

The water quality detector 61 is in fluid communication with the recirculating water loop 60 and is located near the post-filter 51. In this embodiment, the water quality detector 61 is located between the water discharging member 53 and the post-filter 51. The water quality detector 61 is used to detect the quality of the drinking water and then generate a water quality signal indicating or corresponding to the detected quality value of the drinking water. Since the water quality detector 61 is arranged adjacent to the post-filter 51, the water quality signal may really reflect the quality of the drinking water inside the post-filter 51 more accurately. In this embodiment, the water quality detector 61 is used to detect the concentration of total dissolved solid (TDS) in the water to generate the water quality signal corresponding to the concentration value, i.e. representing the quality value, of the drinking water.

The control valve 62 is in fluid communication with the recirculating water loop 60 and located between the water quality detector 61 and the inlet 21 of the pump 20, regulating the flow of the drinking water in the recirculating water loop 60.

The check valve 63 and the connector 64 are in fluid communication with the recirculating water loop 60. The check valve 63 is located between the control valve 62 and the connector 64. In this embodiment, the connector 64 is provided at the terminal of the recirculating water loop 60, and in fluid communication with the inlet 21 of the pump 20 and the pre-filter 11.

In another embodiment, the check valve 63 may be omitted as long as the control valve 62 may effectively block the raw water filtered by the pre-filter 11.

The controller 70 is electrically connected with the pump 20, the water quality detector 61, and the control valve 62 by wires, and stored with a water quality standard and a recirculation period. The controller 70 is used to receive the water quality signal and initiates a water re-purification process based on the water quality signal representing the quality value of the drinking water. The water quality standard stored or built in the controller 70 includes an acceptable total dissolved solid (TDS) concentration of drinking water, and the recirculation period lasts at least 20 seconds. The acceptable TDS concentration of drinking water is related to the raw water conditions in different regions, so the actual acceptable TDS concentration may be set according to the raw water conditions in each region. The recirculation period is related to the volume of the post-filter 51. In this embodiment, 20 seconds are given as an example for a volume of 500 milliliters. If the volume of the post-filter 51 exceeds 500 milliliters, the recirculation period may be prolonged by the controller 70. In another embodiments, when the volume is less than 500 milliliters, the recirculation period may be reduced. In other words, the water quality standard and the recirculation period of the water purification apparatus 1 of the present invention can be adjusted in accordance with the water quality conditions of the installation place and region of the water purification apparatus 1.

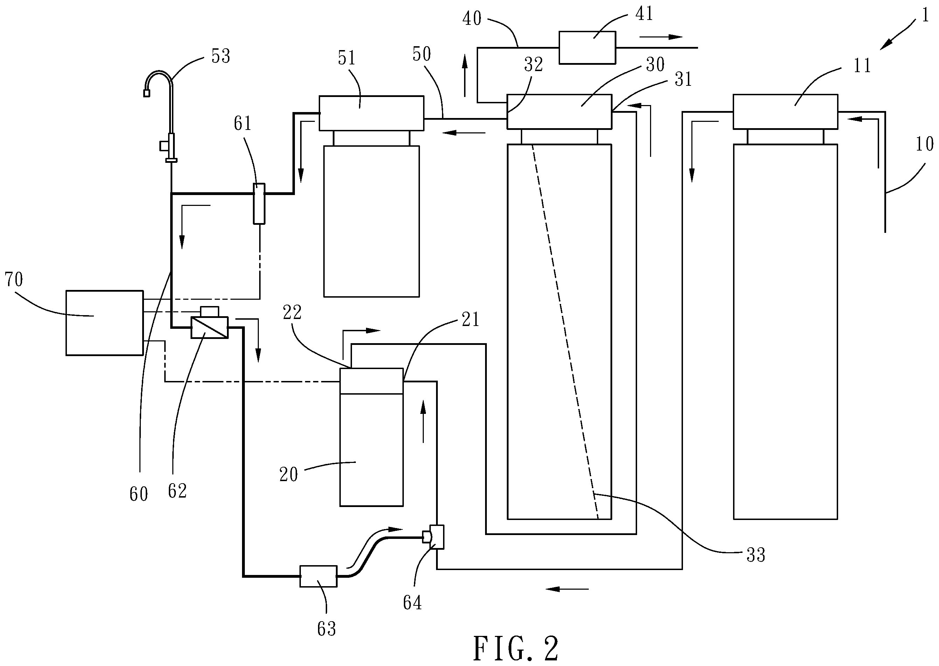

Referring to FIG. 2, when the water discharging member 53 is closed, the drinking water cannot be discharged or supplied through the water discharging member 53, and the water in the overall pipeline of the water purification apparatus 1 is basically stagnant. The controller 70 receives the water quality signal generated by the water quality detector 61 and compares the detected TDS concentration, i.e., the quality value, of the drinking water represented by the water quality signal with the water quality standard. When the quality value indicated by the water quality signal exceeds (is greater than) the water quality standard, the controller 70 activates the pump 20 and the control valve 62 for a time of the recirculation period to recirculate the drinking water in the post-filter 51 through the recirculating water loop 60, thereby reprocessing and re-purifying the drinking water in the post-filter 51.

Specifically, after the water purification apparatus 1 has not been used for discharging the drinking water for a short period of time, the drinking water in the post-filter 51 will be less affected in such a short time though the TDS concentration in the water within the RO filter 30 may gradually increase. At this point, the user can obtain approximately 500 milliliters of water, which is the drinking water stored in the post-filter 51, through the water discharging member 53. The TDS concentration of the drinking water discharged is lower compared to the current TDS concentration in the water within the RO filter 30. Next, the user closes the water discharging member 53. It is important to note that during the water discharging process, the water having a higher TDS concentration retained in the RO filter 30 will flow into the post-filter 51 through the pipelines. This means that after the drinking water is discharged and the water discharging member 53 is closed, the TDS concentration of the drinking water refilled in the post-filter 51 may be higher than the water quality standard set by the controller 70. Therefore, by comparing the water quality standard and the quality value represented by the water quality signal and finding that the quality value is greater than the water quality standard, the controller 70 will initiate the re-purification process. This process allows the drinking water in the post-filter 51 to flow through the control valve 62, the check valve 63, and the connector 64 to mix with the raw water filtered by the pre-filter 11, and then the mixture will be conveyed by the pump 20 to flow into the RO filter 30, the post-filter 51, and the recirculating water loop 60, such that the drinking water in the post-filter 51 will be re-purified for a time equal to the recirculation period set by the controller 70. This ensures that the re-purified drinking water in the post-filter 51 meets the water quality standard set by the controller 70 and maintains the quality of the drinking water in the post-filter 51.

In other hand, if the quality value of the drinking water represented by the water quality signal does not exceed the water quality standard, the controller 70 needs not to initiate the above-mentioned re-purification process.

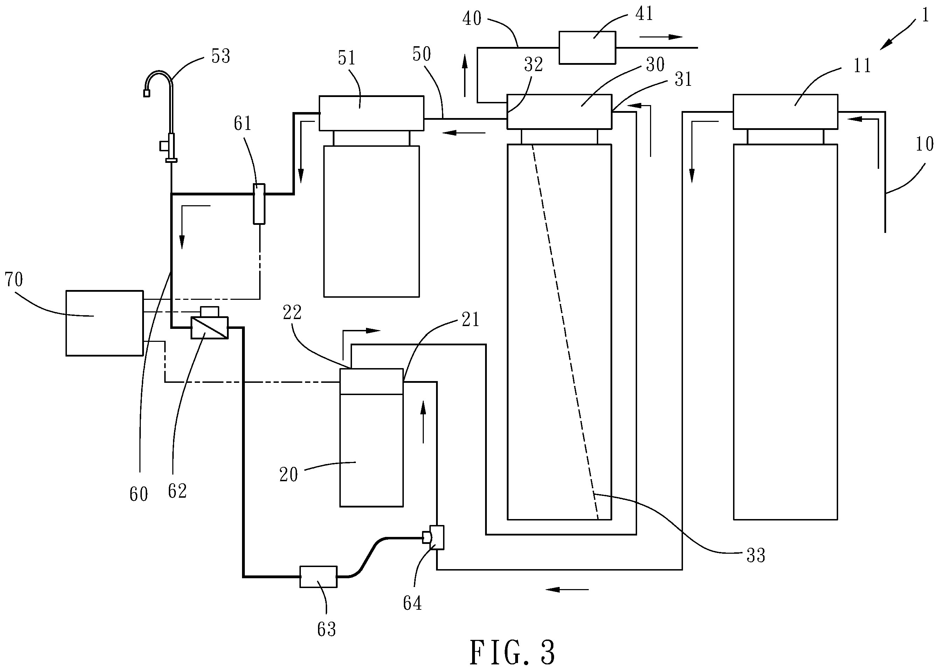

Finally, as shown in FIG. 3, when the re-purification process is completed, the controller 70 closes the control valve 62, preventing the drinking water in the post-filter 51 from flowing through the control valve 62. This ensures that users can still obtain the drinking water that meets the water quality standard in a water discharging task next time.

In conclusion, the water purification apparatus 1 of the present invention, can stably purify the drinking water of the post-filter 51 by means of the operation of the water quality detector 61, the control valve 62, and the controller 70, thereby preventing the discharged drinking water to users from incompliance with the water quality standard.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A water purification apparatus (1), comprising:
a pre-filter (11) for filtering raw water;
an RO filter (30) having an inlet (31) and an outlet (32);
a pump (20) having an inlet (21) in fluid communication with the pre-filter (11), and an outlet (22) in fluid communication with the inlet (31) of the RO filter (30);
a post-filter (51) in fluid communication with the outlet (32) of the RO filter (30) for filtering and storing drinking water;
the water purification apparatus (1) being **characterized in** further comprising:
a recirculating water loop (60) in fluid communication with the post-filter (51) and the inlet (21) of the pump (20) for facilitating flow of the drinking water;
a water discharging member (53) in fluid communication with the recirculating water loop (60) for discharging and stopping discharge of the drinking water;
a water quality detector (61) in fluid communication with the recirculating water loop (60) for generating a water quality signal corresponding to a quality value of the drinking water;
a control valve (62), which is in fluid communication with the recirculating water loop (60) and located between the water quality detector (61) and the inlet (21) of the pump (20);
a controller (70) electrically connected with the pump (20), the water quality detector (61), and the control valve (62) for receiving the water quality signal, the controller (70) being stored with a water quality standard and a recirculation period;
wherein when the water discharging member (53) stops discharge of the drinking water and the quality value of the drinking water represented by the water quality signal exceeds the water quality standard, the controller (70) activates the pump (20) and the control valve (62) for the recirculation period, such that the drinking water in the post-filter (51) recirculates through the recirculating water loop (60) and is re-purified.

2. The water purification apparatus (1) as claimed in claim 1, **characterized in that** the water quality standard stored in the controller (70) includes a total dissolved solid concentration of a drinking water, and the recirculation period is at least 20 seconds.

3. The water purification apparatus (1) as claimed in claim 2, **characterized in that** the water quality standard and the recirculation period are adjustable by the controller (70).

4. The water purification apparatus (1) as claimed in any one of claims 1 to 3, **characterized in that** the controller (70) closes the control valve (62) after the recirculation period has passed.

5. The water purification apparatus (1) as claimed in claim 1, **characterized in that** the water purification apparatus (1) further comprises a check valve (63), which is in fluid communication with the recirculating water loop (60) and located between the control valve (62) and the inlet (21) of the pump (20).

6. The water purification apparatus (1) as claimed in claim 1, **characterized in that** the inlet (21) of the pump (20) receives the drinking water and the raw water filtered through the pre-filter (11) during the recirculation period.
